# EUROPÄISCHE PATENTANMELDUNG

(11) **EP 3 862 224 A1**
(43) Veröffentlichungstag der Anmeldung: **11.08.2021**
(21) Anmeldenummer: 21153912.7
(22) Anmeldetag: 28.01.2021
(51) Int. Cl.: B60P 1/44

(54) **HUBLADEBÜHNE**

(30) Priorität: 07.02.2020 DE 102020000788
(71) Anmelder: Palfinger Tail Lifts GmbH, 27777 Ganderkesee (DE)
(72) Erfinder: Busch-Schweers, Jonas, 26180 Rastede (DE)
(74) Vertreter: Möller, Friedrich

(57) **Zusammenfassung**

Hubladebühnen (11) verfügen über ein Hubwerk (14) und eine Ladeplattform (12), die vom Hubwerk (14) heb- und senkbar sowie verschwenkbar ist. Um die Nutzlast solcher Hubladebühnen (11) zu erhöhen, ist man bestrebt, die Ladeplattform (12) so leicht wie möglich zu gestalten.

Die Erfindung sieht es vor, einen Plattformkörper (20) der Ladeplattform (12) in Leichtbauweise zu bilden. Um einen solchen Leichtbau-Plattformkörper (20) mit ausreichender Stabilität und Festigkeit mit standardgemäßen Plattformkopfträgern (21) und/oder Plattformendspitzen (22) verbinden zu können, ist es weiterhin vorgesehen, zwischen dem Plattformkopfträger (21) und dem Plattformkörper (20) ein Zwischenstück (23) vorzusehen. Alternativ oder zusätzlich ist ein Zwischenstück (24) zwischen einer Plattformendspitze (22) und dem Plattformkörper (20) vorgesehen. Dadurch ist eine ausreichend feste und haltbare Verbindung eines Leichtbau-Plattformkörpers (20) mit einem Standard-Plattformkopfträger (21) und/oder einer Standard-Plattformendspitze (22) möglich.

## Beschreibung

Die Erfindung betrifft eine Hubladebühne gemäß dem Oberbegriff des Anspruchs 1.

Zur Erleichterung des Be- und Entladens von Fahrzeugen dienen Hubladebühnen. Diese verfügen über von jeweils einem Hubwerk heb-, senk- und schwenkbare Ladeplattformen.

Um die Nutzlast solcher Hubladebühnen zu erhöhen, werden Ladeplattformen möglichst leicht ausgebildet. Bekannt sind Ladeplattformen aus Aluminium, die schon eine Gewichtseinsparung gegenüber Hubladebühnen aus Stahl mit sich bringen. Gleichwohl ist man bestrebt, das Gewicht der Ladeplattformen von Hubladebühnen weiter zu reduzieren.

Der Erfindung liegt die Aufgabe zugrunde, eine Hubladebühne zu schaffen, die über eine Ladeplattform verfügt, deren Gewicht gegenüber bisherigen Ladeplattformen aus Aluminium verringert ist.

Eine Hubladebühne zur Lösung der genannten Aufgabe weist die Merkmale des Anspruchs 1 auf. Bei dieser Hubladebühne sind zwischen einem Plattformkörper und einem Plattformkopfträger und alternativ bzw. zusätzlich zwischen dem Plattformkörper und einer Plattformendspitze ein Zwischenstück bzw. jeweils ein Zwischenstück angeordnet. Das jeweilige Zwischenstück ermöglicht es, Leichtbau-Plattformkörper einfach und zuverlässig mit einem üblichen Plattformkopfträger und/oder einer üblichen Plattformendspitze zu verbinden. Bei der üblichen Plattformendspitze bzw. dem Plattformkopfträger handelt es sich um solche, die für konventionelle Hubladebühnen, insbesondere Ladeplattformen derselben, im Einsatz sind.

Bevorzugt erstreckt sich das oder jedes Zwischenstück durchgehend und/oder ununterbrochen über die gesamte Breite der Ladeplattform. Insbesondere erstrecken sich ebenso der Plattformkopfträger und auch die Plattformendspitze durchgehend und/oder ununterbrochen über die gesamte Breite der Ladeplattform. Dann sind nicht nur das jeweilige Zwischenstück, sondern auch der Plattformkopfträger und die Plattformendspitze gleich lang, indem sie sich auch allesamt ununterbrochen zwischen gegenüberliegenden Längsrändern der Ladeplattform erstrecken, um sie bevorzugt zu überbrücken.

Bei einer bevorzugten Ausgestaltung der Hubladebühne ist der Plattformkörper der Ladeplattform sandwichartig ausgebildet. Das lässt einen besonders leichten Plattformkörper zu.

Der sandwichartig ausgebildete Plattformkörper weist einen Sandwichkern und mindestens eine Deckschicht auf wenigstens einer Seite des Sandwichkerns auf. Diese Seite des Sandwichkerns wird dann von der Deckschicht überdeckt. Insbesondere ist die Deckschicht mit der jeweiligen Seite des Sandwichkerns verbunden.

Besonders vorteilhaft ist es, wenn beiden Seiten des Kerns jeweils eine Deckschicht zugeordnet ist, und zwar bevorzugt der Ober- und der Unterseite des Kerns, wobei vorzugsweise die Deckschichten parallel zueinander verlaufen.

Die jeweilige Deckschicht kann mit dem Kern durch Kleben und/oder Schweißen verbunden sein. Infolge der Bildung und Verbindung des Kerns mit vorzugsweise einer Deckschicht auf jeder Seite desselben ist eine besonders leichte und dünne Deckschicht realisierbar. Auch der Kern kann aus einem recht dünnen Material, beispielsweise wabenartigem Material, Schaummaterial oder einer Kombination von beidem gebildet sein.

Bei einer vorteilhaften Ausgestaltungsmöglichkeit der Hubladebühne ist es vorgesehen, die jeweilige Deckschicht gegenüber einem betreffenden Querrand des Plattformkörpers vorstehen zu lassen. Der jeweilige gegenüber dem Querrand des Plattformkörpers vorstehende Bereich der jeweiligen Deckschicht bildet so einen freiliegenden Verbindungsrandstreifen. Der jeweils so gebildete Verbindungsrandstreifen lässt eine relativ großflächige Verbindung der jeweiligen Deckschicht des Plattformkörpers mit dem diesem zugeordneten Zwischenstück zu. Insbesondere eignet sich der jeweilige Verbindungsrandstreifen zur mindestens geklebten Verbindung des Plattformkörpers mit dem ihm zugeordneten Zwischenstück.

Der mindestens eine Verbindungsrandstreifen ist vorteilhafterweise so ausgebildet, dass er das ihm zugeordnete Zwischenstück wenigstens teilweise überlappt. Infolge dieser teilweisen Überlappung kann durch einen entsprechend bemessenen Verbindungsrandstreifen eine hochbelastbare und zuverlässige Verbindung, vorzugsweise Klebeverbindung, des Zwischenstücks mit dem Plattformkörper der Ladeplattform gebildet werden.

Vorzugsweise erstrecken sich die Verbindungsrandstreifen genauso wie das jeweilige Zwischenstück durchgehend über die gesamte Breite der Ladeplattform, also zwischen den gegenüberliegenden Längsrändern der Ladeplattform.

Eine bevorzugte Weiterbildungsmöglichkeit der Hubladebühne, insbesondere ihrer Ladeplattform, sieht es vor, diejenige Seite des oder des jeweiligen Zwischenstücks, der ein Verbindungsrandstreifen der jeweiligen Deckschicht des Plattformkörpers zugeordnet ist, im Bereich der Überlappung mit einem jeweiligen Verbindungsrandstreifen eine mit demselben korrespondierende Ausnehmung zu versehen. Die Ausnehmung verfügt vorzugsweise über die gleiche Fläche des Verbindungsrandstreifens und eine Tiefe, die der Dicke des Verbindungsrandstreifens entspricht. Die Ausnehmung wird dann vom Verbindungsrandstreifen ausgefüllt, so dass ein weitestgehend absatzloser Übergang von einer Oberseite der betreffenden Deckschicht zu einer Oberseite des damit verbundenen Zwischenstücks bildbar ist. Es werden so Hindernisse bildende Absätze auf der Nutzfläche der Ladeplattform wirksam vermieden.

Weiterhin kann es vorgesehen sein, dass wenigstens ein Querrand des Kerns des Plattformkörpers und ein zu diesem Querrand weisender Querrand des dem Plattformkörper zugeordneten Zwischenstücks von der Seite (also quer zur Fahrtrichtung des Fahrzeugs) gesehen gleichermaßen schräggerichtet verlaufen und/oder abgeschrägt sind. Dadurch stoßen die Querränder nicht stumpf aneinander, sondern lassen sich geschäftet zusammenfügen.

Bevorzugt sind durch den jeweiligen schrägen Querrand des Kerns des Plattformkörpers eine untere und eine obere Querkante des Querrands in Längsrichtung der Ladeplattform (in Fahrtrichtung des Fahrzeugs gesehen) versetzt zueinander. Demzufolge sind auch obere und untere Verbindungsrandstreifen der gegenüberliegenden Deckschichten des Kerns, die vorzugsweise gleich lang sind, versetzt zueinander, und zwar um den Versatz der Querkanten des jeweiligen schrägen Querrands des Kerns.

Eine vorteilhafte Weiterbildungsmöglichkeit der Hubladebühne besteht darin, mindestens eine obere Deckschicht des Plattformkörpers mit einer rutschhemmenden Strukturierung zu versehen. Entweder kann die die Nutzfläche bildende Oberseite der oberen Deckschicht direkt rutschhemmend ausgebildet sein und so über eine rutschhemmende Strukturierung verfügen oder die Oberseite der Deckschicht ist mit einer mindestens partiellen rutschhemmenden Beschichtung, beispielsweise Antirutsch-Streifen, versehen. Das trägt zur Sicherheit der auf der Ladeplattform sich bewegenden Personen bei, verringert aber auch die Gefahr des Rutschens der sich auf der Ladeplattform befindlichen Ladung.

Es kann vorgesehen sein, das oder das jeweilige Zwischenstück wie wenigstens einen Teil des Plattformkopfträgers und/oder der Plattformendspitze aus dem gleichen Material, vorzugsweise Aluminium, zu bilden. Auch ist es denkbar, das mindestens eine Zwischenstück gegebenenfalls genauso wie den Plattformkopfträger und/oder die Plattformendspitze als Strangpressprofil oder Stranggussprofil auszubilden. Solche Profile weisen innen mindestens einen Hohlraum, vorzugsweise mehrere benachbarte Hohlräume auf. Dadurch lassen sich das mindestens eine Zwischenstück genauso wie der Plattformkopfträger und die Plattformendspitze trotz eines hohen Widerstandsmoments zur Gewährleistung einer großen Stabilität relativ leicht ausbilden.

Gemäß einer vorteilhaften Weiterbildungsmöglichkeit der Hubladebühne ist es vorgesehen, ein Zwischenstück mit dem Plattformkopfträger und/oder ein Zwischenstück mit der Plattformendspitze formschlüssig, vorzugsweise mit Einhak- bzw. Einsetzverbindung, und/oder Schweißen zu verbinden. Wenn Einhak- und/oder Einsetzverbindungen vorgesehen sind und zusätzlich noch ein Verschweißen erfolgt, brauchen die Schweißnähte nur so bemessen zu sein, dass sie ein unbeabsichtigtes Lösen der Einhak- bzw. Einsetzverbindungen verhindern.

Es kann auch vorgesehen sein, mindestens den Plattformkopfträger mit einer stirnseitigen Anlage und einer wenigstens teilweise unterseitigen Anlage für das jeweilige Zwischenstück zu versehen. Das Zwischenstück liegt dann mindestens teilweise auf der Anlage, insbesondere Anlagefläche, des Plattformkopfträgers auf. Dadurch stützt der Plattformkopfträger das Zwischenstück unterseitig ab, wodurch vom Plattformkopfträger das Zwischenstück getragen wird. Die Einhak- bzw. Einsetzverbindungen und/oder Schweißnähte zur dauerhaften zuverlässigen Verbindung des Zwischenstücks mit insbesondere dem Plattformkopfträger werden dadurch nicht so stark belastet.

Bevorzugte Ausführungsbeispiele der Erfindung werden nachfolgend anhand der Zeichnung näher erläutert. In dieser zeigen:
- Fig. 1: eine perspektivische Darstellung eines hinteren Teils eines Fahrzeugs mit einer daran montierten Hubladebühne bei heruntergeschwenkter (aufgeklappter) abgesenkter Ladeplattform,

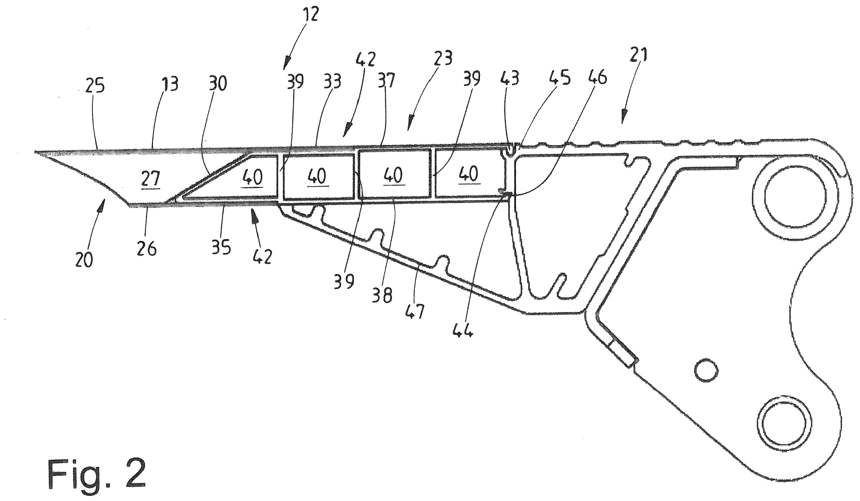

- Fig. 2: einen Längsschnitt durch ein fahrzeugseitiges Vorderteil der Ladeplattform,

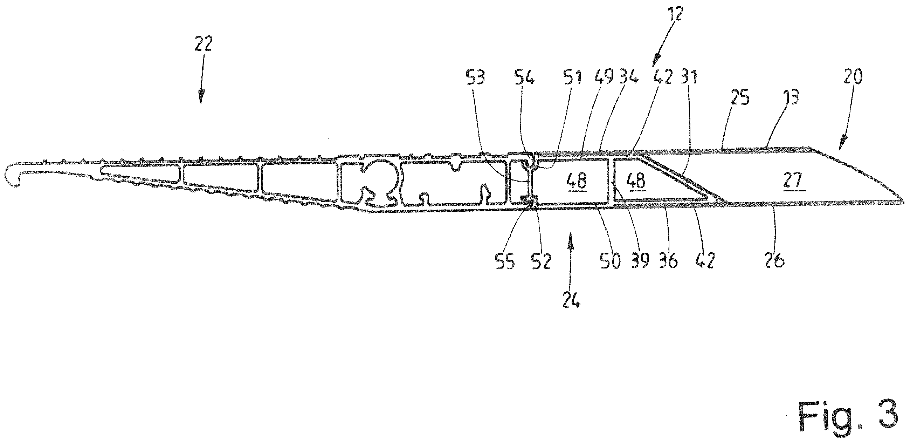

- Fig. 3: einen Längsschnitt durch einen hinteren freien Endbereich der Ladeplattform, und
- Fig. 4: eine Draufsicht auf einen vorderen linken Eckbereich der Ladeplattform mit teilweise weggeschnittener oberer Deckschicht.

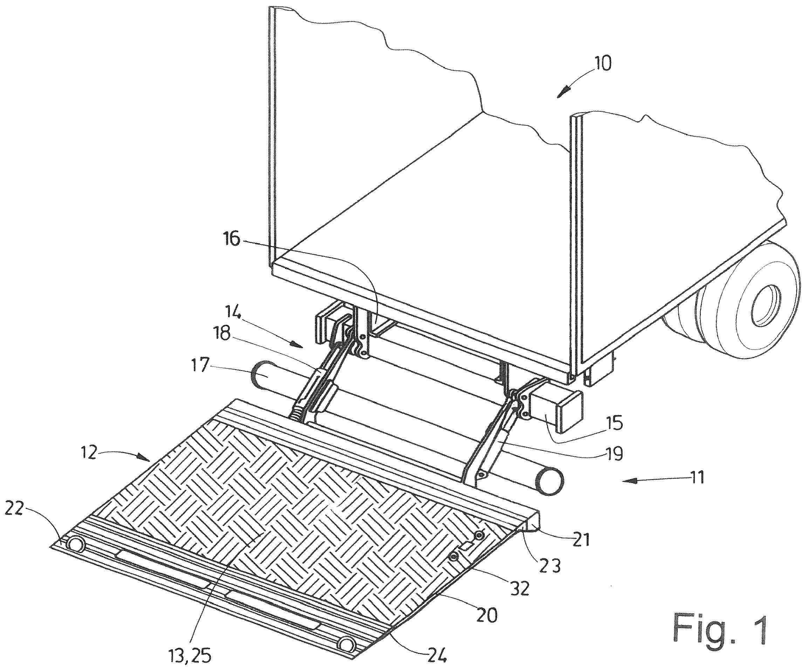

In der Fig. 1 ist ein Fahrzeug teilweise dargestellt, und zwar mit einer Rückseite seines Fahrzeugaufbaus 10. An der Rückseite des Fahrzeugaufbaus 10 ist eine Hubladebühne 11 montiert. Die Hubladebühne 11 verfügt über eine flächige, plattenartige Ladeplattform 12 mit etwa rechteckiger oder gegebenenfalls auch quadratischer Grundfläche. Eine Oberseite der Ladeplattform 12 bildet eine ebene Nutzfläche 13 der Hubladebühne 11.

Des Weiteren verfügt die Hubladebühne 11 über ein Hubwerk 14 zum Heben, Senken und Verschwenken der Ladeplattform 12. Mit dem Hubwerk 14 ist die Hubladebühne 11 im hinteren Bereich des Fahrzeugs des Chassis montiert, und zwar im gezeigten Ausführungsbeispiel an einem quer zur Fahrtrichtung am Chassis des Fahrzeugs vorgesehenen Tragrohr 15. Alternativ kann die Hubladebühne 11 mit dem Hubwerk 14 auch direkt an Längsträgern 16 des Chassis des Fahrzeugs montiert sein.

Das Hubwerk 14 der in der Fig. 1 dargestellten Hubladebühne 11 verfügt über zwei vorzugsweise als Hydraulikzylinder ausgebildete Druckmittelzylinder, und zwar jeweils einen Schwenkzylinder 18 und einen Hubzylinder 19. Abweichend vom gezeigten Ausführungsbeispiel kann die Hubladebühne 11 auch über zwei parallele Schwenkzylinder 18 und zwei parallele Hubzylinder 19 verfügen. Denkbar ist es auch, das Heben, Senken und/oder Verschwenken der Ladeplattform 12 elektrisch betätigt durchzuführen. Das Hubwerk 14 verfügt dann über keine Druckmittelzylinder, sondern über elektrische Linearantriebe, beispielsweise von Elektromotoren betriebene Spindeltriebe.

Die in der Fig. 1 gezeigte Hubladebühne weist noch einen am Hubwerk 14 mitfahrend montierten Unterfahrschutz 17 auf. Hierauf ist die Erfindung aber nicht beschränkt. Sie lässt sich vielmehr auch mit Hubladebühnen 11 ohne einen Unterfahrschutz 17 oder einen anderweitig montierten Unterfahrschutz 17 realisieren.

In erfindungsgemäß besonderer Weise ist die Ladeplattform 12 ausgebildet, nämlich als Leichtbau-Ladeplattform 12. Im Wesentlichen setzt sich die Ladeplattform 12 zusammen aus einem einen Großteil der Ladeplattform 12 und ihrer Nutzfläche 13 bildenden Plattformkörper 20, einem quer zur Fahrtrichtung verlaufenden und sich ununterbrochen durchgehend über die gesamte Breite der Ladeplattform 12, insbesondere des Plattformkörpers 20, erstreckenden Plattformkopfträger 21, der mit dem Hubwerk 14 schwenkbar verbunden ist, einer dem gegenüberliegenden, hinteren Ende des Plattformkörpers 20 zugeordneten und sich auch ununterbrochen über die gesamte Breite der Ladeplattform 12 erstreckenden Plattformendspitze 22, einem Zwischenstück 23 zwischen dem Plattformkopfträger 21 und dem zu diesem weisenden Ende des Plattformkörpers 20 sowie einem Zwischenstück 24 zwischen der Plattformendspitze 22 und dem zu dieser weisenden Ende des Plattformkörpers 20. Die beiden schmalen, streifenförmigen Zwischenstücke 23 und 24 verlaufen genauso wie der Plattformkopfträger 21 und die Plattformendspitze 22 quer zur Fahrtrichtung des Fahrzeugs, und zwar ununterbrochen und durchgehend über die gesamte Breite, also zwischen gegenüberliegenden Längsseitenrändern der Ladeplattform.

Der Plattformkörper 20 ist im Leichtbau gebildet. Dazu ist der Plattformkörper 20 sandwichartig aufgebaut mit einer oberen Deckschicht 25, einer unteren Deckschicht 26 sowie einem dazwischenliegenden Kern 27. Die Deckschichten 25 und 26 erstrecken sich vollflächig mindestens über die gesamte Fläche des Plattformkörpers 20. Insbesondere verlaufen die Deckschichten 25 und 26 ununterbrochen über die volle Breite und zwischen den gegenüberliegenden Längsseitenrändern der Ladeplattform 12. Die obere Deckschicht 25 und die untere Deckschicht 26 des Plattformkörpers 20 verlaufen parallel zueinander, so dass der Plattformkörper 20 überall gleich hoch bzw. dick ist. Die obere Deckschicht 25 bzw. ihre Oberseite bilden die Nutzfläche 13 der Ladeplattform 12. In der Darstellung der Fig. 1 ist die Nutzfläche 13 bzw. die Deckschicht 25 mit einer rutschhemmenden Strukturierung versehen. Die dargestellte Profilierung soll nur ein Beispiel einer möglichen Strukturierung sein. Andere Strukturierungen sind denkbar. Gegebenenfalls braucht die Nutzfläche 13 auch keine sichtbare Strukturierung aufzuweisen, wenn sie durch Aufrauen oder Beschichten rutschhemmend gemacht ist.

Beim hier gezeigten Plattformkörper 20 sind die obere Deckschicht 25 und die untere Deckschicht 26 gleichermaßen aus dünnen Aluminiumblechen gebildet ist. Die Wandstärken der Aluminiumbleche des oberen Deckblechs 25 und des unteren Deckblechs 26 sind vorzugsweise gleich, können aber durchaus auch unterschiedlich sein, indem vor allem die die Nutzfläche 13 bildende obere Deckschicht 25 eine größere Wandstärke aufweist als die untere Deckschicht 26.

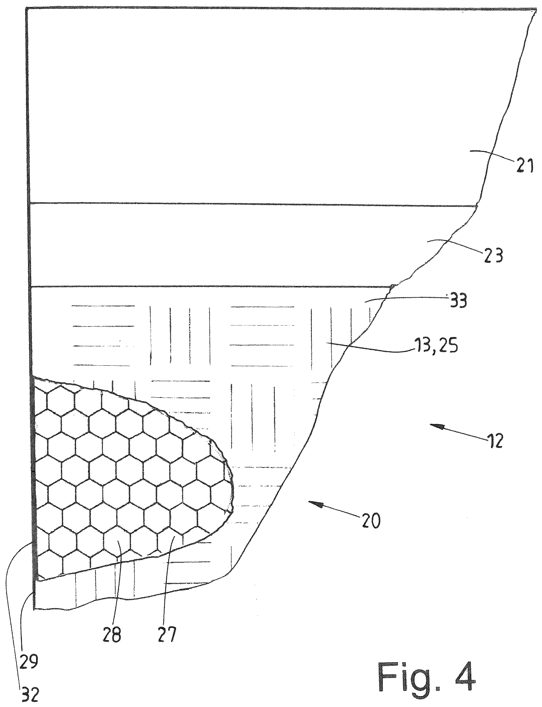

Der innere Kern 27 ist gemäß der Darstellung in der Fig. 4 aus einer Aluminiumwabe gebildet. Beim Beispiel der Fig. 4 ist die Wabenstruktur des Kerns 27 nach Art einer Honigwabe ausgebildet. Es sind aber auch andere Strukturen denkbar, beispielsweise nach Art eines Schachbretts. Die aufrechten Wandungen zur Bildung des Kerns 27 sind aus Aluminium dünner Wandstärke gebildet. Vorzugsweise ist die Wandstärke der Waben des Kerns 27 um 20% bis 80% geringer als die Wandstärken der Deckschichten 25, 26. Die Verbindung der Deckschichten 25 und 26 mit dem dazwischenliegenden Kern 27 erfolgt durch Kleben und/oder nach dem Prinzip des Pressschweißens.

Der wabenartige Kern 27 bildet im Inneren des Plattformkörpers 20 eine Vielzahl gleicher bzw. gleichgroßer Kammern 28. Diese können hohl bleiben, aber auch ausgeschäumt werden.

An den parallelen Längsrändern 29 und Querrändern 30, 31 des Kerns 27 befinden sich seitlich offene Kammern 28. Diese sind zumindest an den gegenüberliegenden Längsrändern 29 des Plattformkörpers 20 verschlossen durch Längswände 32, deren Kanten bis zu den Längsrändern 29 der Deckschichten 25 und 26 verlaufen und damit vorzugsweise verbunden sind.

Die Deckschichten 25 und 26 stehen gegenüber beiden Querrändern 30 und 31 des Kerns 27 über. Diese gegenüber dem Kern 27 überstehenden bzw. vorstehenden Bereiche der Deckschichten 25 und 26 bilden obere Verbindungsrandstreifen 33, 34 und untere Verbindungsrandstreifen 35, 36. Genauso wie die Deckschichten 25 und 26 erstrecken sich auch die Verbindungsrandstreifen 33, 34, 35, 36 ununterbrochen über die gesamte Breite der Ladeplattform 12. Dadurch verlaufen auch die Verbindungsrandstreifen 33 bis 36 durchgehend zwischen den gegenüberliegenden Längsrändern der Ladeplattform 12.

Der zum Plattformkopfträger 21 weisende vordere Querrand 30 und der zur Plattformendspitze 22 weisende hintere Querrand 31 des Kerns 37 sind um etwa 35° bis 55° abgeschrägt. Im gezeigten Ausführungsbeispiel sind die Abschrägungen gegensinnig, so dass die unter der oberen Deckschicht 25 liegende Oberseite des Kerns 27 länger ist als die an der unteren Deckschicht 26 anliegende Unterseite des Kerns 27. Infolge der im gezeigten Ausführungsbeispiel gleich langen Verbindungsrandstreifen 33, 34, 35, 36 ist deshalb die obere Deckschicht 25 länger als die untere Deckschicht 26.

Die Zwischenstücke 23 und 24 sind als Aluminium-Hohlkammerprofile gebildet. Vorzugsweise sind die Zwischenstücke 23 und 24 einstückig aus Aluminium im Druckguss- bzw. Strangpressverfahren hergestellt. Jedes Zwischenstück 23, 24 verfügt über eine ebene Deckwandung 37, 49 und eine diesem mit Abstand gegenüberliegende Bodenwandung 38, 50. Die jeweiligen Deckwandung 37, 49 und Bodenwandung 38, 50 verlaufen mit Abstand parallel zueinander und sind einstückig miteinander verbunden durch aufrechte quergerichtete Stege 39, zwischen denen durchgehende Hohlkammern 40, 48 gebildet sind. Der Abstand der Außenseiten der Deckwandungen 37, 49 und der Bodenwandungen 38, 50 des jeweiligen Zwischenstücks 23, 24, also ihre Höhe bzw. Dicke, entsprechen der Höhe bzw. Dicke des Plattformkörpers 20. Die Wandstärken mindestens der Deckwandungen 37, 49 und der Bodenwandungen 38, 50 der Zwischenstücke 23 und 24 sind größer als diejenigen der Deckschichten 25 und 26 des Plattformkörpers 20. Zu den schräggerichteten Querrändern 30, 31 des Kerns 27 des Plattformkörpers 20 gerichtete Querränder der Zwischenstücke 23 und 24 korrespondieren mit den Querrändern 30, 31, sind also genauso schräggerichtet und liegen an den schrägen Querrändern 30, 31 des Kerns 27 an. Die gegenüberliegenden Querränder der Zwischenstücke 23 und 24 verlaufen quer, insbesondere rechtwinklig, zu den Deckwandungen 37, 49 und Bodenwandungen 38, 50 der Zwischenstücke 23, 24.

Das jeweilige Zwischenstück 23, 24 ist mit dem Plattformkörper 20 mittels der Verbindungsrandstreifen 33, 34, 35, 36 verbunden. Dazu überlappen die gegenüber dem Kern 27 vorstehenden Verbindungsrandstreifen 33, 34, 35, 36 der oberen und unteren Deckschichten 25, 26 des Plattformkörpers 20 einen zum Plattformkörper 20 weisenden Teils der Deckwandung 37, 49 und der Bodenwandung 38, 50 des jeweiligen Zwischenstücks 23, 24. Die hier gezeigten Zwischenstücke 23, 24 weisen im Bereich der Überlappung der Verbindungsrandstreifen 33, 34, 35, 36 Ausnehmungen 42 zumindest in der Deckwandung 37 und den Bodenwandung 38, 50 auf. Die Zwischenstücke 23, 24 und ihre Ausnehmungen 42 erstrecken sich wie die Verbindungsrandstreifen 33, 34, 35, 36 durchgehend über die gesamte Breite der Ladeplattform 12, also von einer Seite zur gegenüberliegenden Seite derselben. Die Länge der jeweiligen Ausnehmung 42 entspricht der Länge des jeweiligen Verbindungsrandstreifens 33, 34, 35, 36. Weil diese im gezeigten Ausführungsbeispiel gleich lang sind, sind auch alle Ausnehmungen 42 gleich lang bzw. breit. Die Tiefe der jeweiligen Ausnehmung 42 entspricht der Dicke des jeweiligen Verbindungsrandstreifens 33, 34, 35, 36, also der Dicke der oberen Deckschicht 25 und der unteren Deckschicht 26. Wenn die obere Deckschicht 25 und die untere Deckschicht 26 gleich dick sind, sind alle Ausnehmungen 42 gleich tief.

Dauerhaft verbunden sind die Verbindungsrandstreifen 33 bis 36 der Deckschichten 25 und 26 des Plattformkörpers 20 mit den Zwischenstücken 23 und 24 durch Kleben. Die Klebung erfolgt im Bereich der sich überlappenden und zueinander weisenden Flächen der Verbindungsrandstreifen 33 bis 36 und der Zwischenstücke 23 und 24, und zwar in den Bereichen der Ausnehmungen 42 der Zwischenstücke 23, 24. Zusätzlich können die freien Querränder der Verbindungsrandstreifen 33 bis 36 mit den Zwischenstücken 23 und 24 verschweißt sein.

Die dem Plattformkörper 20 gegenüberliegenden und zum Plattformkopfträger 21 bzw. zur Plattformendspitze 22 weisenden Enden der Zwischenstücke 23, 24 sind so ausgebildet, dass sie so wie die Plattformkörper konventioneller Ladeplattformen 12 mit dafür verwendeten, standardmäßigen Plattformkopfträgern 21 und Plattformendspitzen 22 verbindbar sind. Demzufolge sind nicht der Plattformkopfträger 21 und die Plattformendspitze 22 an die erfindungsgemäße Leichtbau-Hubladebühne 11, insbesondere den Leichtbau-Plattformkörper 20 derselben, angepasst, sondern die mit gegenüberliegenden Enden des Plattformkörpers 20 verbundenen Zwischenstücke 23 und 24. Beim gezeigten Ausführungsbeispiel sind zum Plattformkopfträger 21 weisende freie Enden, nämlich Querränder, der Deckwandung 37 und der Bodenwandung 38 des Zwischenstücks 23 mit Verbindungsteilen 43, 44 versehen, die verbindbar sind mit korrespondierenden Verbindungsteilen 45, 46 von standardgemäßen üblichen Plattformkopfträgern 21. Das Verbindungsteil 43 an der Deckwandung 37 des Zwischenstücks 23 ist als ein nach unten weisender Vorsprung ausgebildet, der von oben her in das als Vertiefung bzw. Aufnahmepfanne ausgebildete Verbindungsteil 45 an der Oberseite des Plattformkopfträgers 21 eingreift und/oder eingesteckt ist. Das Verbindungsteil 44 am freien Ende der Bodenwandung 38 des Zwischenstücks 23 ist als ein Hakenvorsprung ausgebildet, der rastend in einem eine Hinterschneidung aufweisenden Haken des Verbindungsteils 46 am Plattformkopfträger 21 ausgebildet ist. Durch die genannten Verbindungsteile 43 bis 46 ist das Zwischenstück 23 formschlüssig durch Einhängen und Rasten mit dem standardgemäßen Plattformkopfträger 21 verbindbar. Diese Verbindung kann sowohl zwischen den Verbindungsteilen 43 und 45 als auch oder alternativ zwischen den Verbindungsteilen 44 und 46 durch Schweißen ergänzt bzw. gesichert werden.

Der hier gezeigte Standard-Plattformkopfträger 21 weist an seinem unteren Endbereich eine schräg ansteigend zur Unterseite des Zwischenstücks 23 verlaufende schräge Stützwand 47 auf. Diese endet dort unter der Bodenwandung 38 des Zwischenstücks 23, wo der untere Verbindungsrandstreifen 35 der unteren Deckschicht 26 des Plattformkörpers 20 endet. Dadurch stützt die Stützwand 47 das Zwischenstücks 23 an seiner Bodenwandung 38 unmittelbar neben der Verbindung des unteren Verbindungsrandstreifens 35 der unteren Deckschicht 26 des Plattformkörpers 20 ab. Gegebenenfalls kann das sich unter der Bodenwandung 38 des Zwischenstücks 23 abstützende Ende der Stützwand 47 mit der Bodenwandung 38 des Zwischenstücks 23 verschweißt und/oder verklebt sein.

In ähnlicher Weise wie das Zwischenstück 23 mit dem Plattformkopfträger 21 verbunden ist, ist auch die Verbindung des Zwischenstücks 24 mit der Plattformendspitze 22 hergestellt. Auch die Plattformendspitze 22 ist als standardmäßiges, handelsübliches Aluminiumprofil, insbesondere Aluminium-Strangpressprofil oder Aluminiumstranggussprofil, ausgebildet.

Das hier gezeigte Zwischenstück 24 zur Verbindung des Plattformkörpers 20 mit der Plattformendspitze 22 ist kürzer als das Zwischenstück 23 zur Verbindung des Plattformkörpers 20 mit dem Plattformkopfträger 21. Das Zwischenstück 24 verfügt im gezeigten Ausführungsbeispiel nur über zwei quergerichtet über die gesamte Breite der Ladeplattform 20 sich durchgehend erstreckende Hohlkammern 48. Infolge des kürzeren Zwischenstücks 24 erstreckt sich der obere Verbindungsrandstreifen 34 der oberen Deckschicht 25 des Plattformkörpers 20 über eine gesamte Deckwandung 49 des Zwischenstücks 24 hinweg, während sich der untere Verbindungsrandstreifen 36 der unteren Deckschicht 26 nur etwa über die halbe Länge einer Bodenwandung 50 des Zwischenstücks 24 erstreckt. Auch in der Bodenwandung 50 ist eine Ausnehmung 42 zur bündigen formschlüssigen Aufnahme des unteren Verbindungsrandstreifens 36 der unteren Deckschicht 26 vorgesehen. Eine solche kann in der Deckwandung 49 des Zwischenstücks 24 fehlen, weil der obere Verbindungsrandstreifen 34 vollständig oder zumindest fast vollständig die gesamte Deckwandung 49 überlappt.

Beim Zwischenstück 24 sind auch zwei Verbindungsteile 51, 52 an seinen zur Plattformendspitze 22 weisenden Enden vorgesehen. Das obere Verbindungsteil 51 ist als oben offene Aufnahmemulde und das untere Verbindungsteil 52 als ein unten offener Rasthaken ausgebildet. Beim Zwischenstück 24 sind die Verbindungsteile 51 und 52 durch eine senkrechte Wandung 53 verbunden, so dass das zur Plattformendspitze 22 weisende Ende des Zwischenstücks 24 im Gegensatz zum Zwischenstück 23 geschlossen ist. Mit den Verbindungsteilen 51 und 52 des Zwischenstücks 24 zu verbindende Verbindungsteile 54, 55 am zum Zwischenstück 24 weisenden Ende der Plattformendspitze 22 sind korrespondierend zu den Verbindungsteilen 51, 52 des Zwischenstücks 24 ausgebildet, insbesondere ist das Verbindungsteil 54 als nach unten weisender Vorsprung und das Verbindungsteil 55 als nach oben weisende Hakenleiste ausgebildet. So ist auch mit dem Zwischenstück 24 die standardgemäße Plattformendspitze 22 durch Einhängen der Verbindungsteile 51 und 54 und rastendes Zusammensetzen der Verbindungsteile 52, 55 verbindbar. Gegebenenfalls können diese Verbindungen zusätzlich durch Schweißen gesichert sein.

Das zuvor beschriebene Ausführungsbeispiel verfügt über je ein Zwischenstück 23 und 24 zur Verbindung des Plattformkörpers 20 mit einem standardmäßigen Plattformkopfträger 21 und einer standardmäßigen Plattformendspitze 22. Es ist auch ein anderes Ausführungsbeispiel der Hubladebühne 11 denkbar, bei dem nur der standardmäßige Plattformkopfträger 21 mittels des Zwischenstücks 23 mit dem Leichtbau-Plattformkörper 20 verbunden ist, aber nicht auch die Plattformendspitze 22. Diese wird dann direkt mit dem Plattformkörper 20 verbunden, wozu die Plattformendspitze 22 entsprechend angepasst sein muss.

Auch ist ein Ausführungsbeispiel der Hubladebühne 11 denkbar, wobei der Kern 27 des Plattformkörpers 20 zwischen der oberen Deckschicht 25 und der unteren Deckschicht 26 keine Aluminiumwaben aufweist, sondern nur ausgeschäumt ist und gegebenenfalls mit Verstärkungsstrukturen aus Glasfasern oder Kohlefasern zwischen den Deckschichten 25 und 26 aus dünnen Aluminiumblechen versehen ist. Beispielsweise können auch sogenannte Kunststoffstegplatten den Kern 27 bilden, die erforderlichenfalls mit Kohlefasern oder Glasfasern verstärkt sind. Wenn sich zwischen den oberen und unteren Deckenschichten 25 und 26 des Plattformkörpers 20 geschäumtes Material befindet, handelt es sich dabei bevorzugt um Schaumkunststoffplatten, die mit Kunstharz getränkt sind und/oder mit Verstärkungsstrukturen, insbesondere Verstärkungsstränge aus hochzugfesten Fasern, versehen sind.

**Bezugszeichenliste:**

| | | | |
|---|---|---|---|
| 10 | Fahrzeugaufbau | 43 | Verbindungsteil |
| 11 | Hubladebühne | 44 | Verbindungsteil |
| 12 | Ladeplattform | 45 | Verbindungsteil |
| 13 | Nutzfläche | 46 | Verbindungsteil |
| 14 | Hubwerk | 47 | Stützwand |
| 15 | Tragrohr | 48 | Hohlkammer |
| 16 | Längsträger | 49 | Deckwandung |
| 17 | Unterfahrschutz | 50 | Bodenwandung |
| 18 | Schwenkzylinder | 51 | Verbindungsteil |
| 19 | Hubzylinder | 52 | Verbindungsteil |
| 20 | Plattformkörper | 53 | Wandung |
| 21 | Plattform kopfträger | 54 | Verbindungsteil |
| 22 | Plattformendspitze | 55 | Verbindungsteil |
| 23 | Zwischenstück | | |
| 24 | Zwischenstück | | |
| 25 | obere Deckschicht | | |
| 26 | untere Deckschicht | | |
| 27 | Kern | | |
| 28 | Kammer | | |
| 29 | Längsrand | | |
| 30 | vorderer Querrand | | |
| 31 | hinterer Querrand | | |
| 32 | Längswand | | |
| 33 | oberer Verbindungsrandstreifen | | |
| 34 | oberer Verbindungsrandstreifen | | |
| 35 | unterer Verbindungsrandstreifen | | |
| 36 | unterer Verbindungsrandstreifen | | |
| 37 | Deckwandung | | |
| 38 | Bodenwandung | | |
| 39 | Steg | | |
| 40 | Hohlkammer | | |
| 42 | Ausnehmung | | |

## Patentansprüche

1. Hubladebühne (11) für ein Fahrzeug mit einer Ladeplattform (12) und einem diesen tragenden Hubwerk (14) zum Heben, Senken und Verschwenken der Ladeplattform (12), wobei die Ladeplattform einen eine obere Nutzfläche (13) aufweisenden flächigen Plattformkörper (20), einen mit dem Hubwerk (14) verbundenen Plattformkopfträger (21) und gegebenenfalls eine Plattformendspitze (22) aufweist, **dadurch gekennzeichnet, dass** zwischen dem Plattformkörper (20) und dem Plattformkopfträger (21) und/ oder zwischen dem Plattformkörper (20) und der Plattformendspitze (22) ein Zwischenstück (23 bzw. 24) oder jeweils ein Zwischenstück (23, 24) angeordnet ist.

2. Hubladebühne nach Anspruch 1, **dadurch gekennzeichnet, dass** der Plattformkörper (20) sandwichartig ausgebildet ist mit einem Kern (27) und mindestens einer die Nutzfläche (13) bildenden oberen Deckschicht (25), wobei vorzugsweise jeweils eine Deckschicht (25, 26) den Kern (27) ober- und/oder unterseitig überdeckt und die jeweilige Deckschicht (25, 26) mit einer Ober- und/oder Unterseite des Kerns (27) verbunden ist.

3. Hubladebühne nach Anspruch 1 oder 2, **dadurch gekennzeichnet, dass** der Plattformkörper (20) mit seiner einzigen Deckschicht (25 oder 26) oder beiden Deckschichten (25, 26) mit dem oder dem jeweiligen Zwischenstück (23, 24) verbunden ist, vorzugsweise durch Kleben und/oder Schweißen.

4. Hubladebühne nach einem der vorhergehenden Ansprüche, **dadurch gekennzeichnet, dass** die oder die jeweilige Deckschicht (25, 26) des Plattformkörpers (20) einen gegenüber einem solchen Querrand des Kerns (27), dem ein Zwischenstück (23, 24) zugeordnet ist, vorstehenden Verbindungsrandstreifen (33, 34, 35, 36) zur Verbindung des Plattformkörpers (20) mit dem oder dem jeweiligen Zwischenstück (23, 24) aufweist.

5. Hubladebühne nach Anspruch 4, **dadurch gekennzeichnet, dass** der jeweilige Verbindungsrandstreifen (33, 34, 35, 36) das betreffende Zwischenstück (23, 24) wenigstens teilweise überlappt und/oder der mindestens eine Verbindungsrandstreifen (33, 34, 35 oder 36) mit einer Ober- und/oder Unterseite des jeweiligen Zwischenstücks (23, 24) verklebt und/oder verschweißt ist.

6. Hubladebühne nach Anspruch 4 oder 5, **dadurch gekennzeichnet, dass** wenigstens eine Seite des oder des jeweiligen Zwischenstücks (23, 24), der ein Verbindungsrandstreifen (33, 34, 35 bzw. 36) des Plattformkörpers (20) zugeordnet ist, im Bereich der Überlappung mit dieser Seite eine mit dem Verbindungsrandstreifen (33, 34, 35 bzw. 36) korrespondierende Ausnehmung (42) aufweist.

7. Hubladebühne nach einem der Ansprüche 4 bis 6, **dadurch gekennzeichnet, dass** der jeweilige Querrand des Kerns (27) des Plattformkörpers (20) und ein zu diesem Querrand weisender Querrand des Zwischenstücks (23, 24) von der Seite gesehen gleichermaßen abgeschrägt verlaufen und/oder abgeschrägt sind und/oder gegenüber der durch den schrägen Querrand des Kerns (27) des Plattformkörpers (20) versetzt zueinander verlaufenden oberen und unteren Querkanten des Querrands die Verbindungsrandstreifen (33, 34, 35 bzw. 36) der oberen Deckschicht (25) und der unteren Deckschicht (26) vorzugsweise gleich weit vorstehen.

8. Hubladebühne nach einem der vorhergehenden Ansprüche, **dadurch gekennzeichnet, dass** mindestens die die Nutzfläche (13) der Ladeplattform (12) bildende obere Deckschicht (25) des Plattformkörpers (20) eine rutschhemmende Strukturierung aufweist und/oder mit einer rutschhemmenden Beschichtung versehen ist.

9. Hubladebühne nach einem der vorhergehenden Ansprüche, **dadurch gekennzeichnet, dass** das oder das jeweilige Zwischenstück (23, 24) sowie wenigstens ein Teil des Plattformkopfträgers (21) und/oder der Plattformendspitze (22) gleichermaßen aus Aluminium oder Stahl und/oder Strangpressprofil oder Stranggussprofil aus Aluminium oder Stahl ausgebildet sind.

10. Hubladebühne nach einem der vorhergehenden Ansprüche, **dadurch gekennzeichnet, dass** das Zwischenstück (23) mit dem Plattformkopfträger (21) und/oder das Zwischenstück (24) mit der Plattformendspitze (22) formschlüssig, vorzugsweise mit Einsetz- und/oder Einhakverbindungen, und/oder durch Schweißen verbunden ist.

11. Hubladebühne nach einem oder mehreren der vorhergehenden Ansprüche, **dadurch gekennzeichnet, dass** die Zwischenstücke (23, 24) und/oder die Verbindungsrandstreifen (33, 34, 35, 36) wie der Plattformkopfträger (21) und/oder die Plattformendspitze (22) durchgehend und ununterbrochen zwischen gegenüberliegenden Längsrändern und/oder Seiten der Ladeplattform (12) verlaufen und/oder sich ununterbrochen über die volle Breite der Ladeplattform (12) erstrecken.
